# FASCICULE DE BREVET EUROPEEN

(11) **EP 0 870 743 B1**
(45) Date de publication et mention de la délivrance du brevet: **17.07.2002**
(21) Numéro de dépôt: 97490007.8
(22) Date de dépôt: 08.04.1997
(51) Int. Cl.: C04B 41/63

(54) **Panneau à matrice cimentaire**
Bauplatte mit Zementmatrix
Building panel having cement matrix

(43) Date de publication de la demande: 14.10.1998
(73) Titulaire: Betsinor Société Anonyme, 62710 Courrières (FR)
(72) Inventeur: Stoeux, Dominique, 59184 Sainghin en Weppes (FR); Pierre, André, 78760 Pontchartrain (FR)
(74) Mandataire: Lepage, Jean-Pierre

(56) Documents cités:
- WO-A-93/25625
- CHEMICAL ABSTRACTS, vol. 114, no. 24, 17 Juin 1991 Columbus, Ohio, US; abstract no. 233882b, XP000186858 & JP 02 258 682 A (DAINIPPON INK AND CHEMICALS INC) 19 Octobre 1990
- CHEMICAL ABSTRACTS, vol. 106, no. 10, 9 Mars 1987 Columbus, Ohio, US; abstract no. 72035v, XP000185123 & JP 61 014 184 A (DAIWA SEKIYU KK) 22 Janvier 1986
- CHEMICAL ABSTRACTS, vol. 110, no. 14, 3 Avril 1989 Columbus, Ohio, US; abstract no. 120241r, XP000058402 & JP 63 210 083 A (MATSUSHITA ELECTRIC WORKDS LTD) 31 Août 1988
- CHEMICAL ABSTRACTS, vol. 109, no. 18, 31 Octobre 1988 Columbus, Ohio, US; abstract no. 155156y, XP000157929 & JP 63 069 779 A (TOSHIBA SILICONE CO LTD) 29 Mars 1988
- CHEMICAL ABSTRACTS, vol. 110, no. 22, 29 Mai 1989 Columbus, Ohio, US; abstract no. 198233j, XP000057320 & JP 63 265 884 A (KOWA CHEMICAL INDUSTRIES CO LTD) 2 Novembre 1988
- CHEMICAL ABSTRACTS, vol. 98, no. 14, 4 Avril 1983 Columbus, Ohio, US; abstract no. 112680b, XP000185250 & SU 948 980 A (MINSK STATE SCIENTIFIC RESEARCH INSTITUTE OF CONSTRUCTION MATERIALS) 7 Août 1982
- DATABASE WPI Section Ch, Week 9339 Derwent Publications Ltd., London, GB; Class A14, AN 93-309028 XP002039033 & JP 05 221 745 A (MATSUSHITA ELECTRIC WORKS LTD) , 31 Août 1993

## Description

La présente invention concerne un panneau à matrice cimentaire, utilisable notamment dans le domaine de la construction et des travaux publics.

L'invention pourra donc trouver son application dans tout domaine lié à la construction et par exemple pourra être utilisée pour la protection et le recouvrement d'ouvrages tels que les parois intérieures de tunnel.

On connaît actuellement des panneaux formés de ciment ou de béton utilisés tels quels ou recouverts d'une couche de peinture.

La couche de peinture permet une protection du panneau vis-à-vis de différentes agressions et notamment les agressions chimiques, le gel et les graffitis.

Néanmoins, les panneaux actuellement utilisés avec une couche de peinture présentent différents inconvénients.

Il faut tout d'abord remarquer que l'utilisation de peinture entraîne la présence de solvants qui s'évaporent une fois que la couche de peinture est appliquée.

La présence de solvants est gênante d'une part parce qu'ils constituent des dégagements gazeux qui peuvent être nocifs et d'autre part parce que lors de son évaporation, le solvant détériore l'état de surface de la couche de peinture.

En effet, l'évaporation du solvant entraîne des irrégularités et des aspérités dans la couche de peinture.

Un autre inconvénient des panneaux recouverts d'une couche de peinture est qu'ils nécessitent un temps de séchage important.

Par ailleurs, la couche de peinture adhère relativement faiblement sur le panneau et procure donc un accrochage médiocre de la couche sur le panneau.

Un autre inconvénient des panneaux recouverts d'une couche de peinture est que leur résistance aux agressions extérieures est limitée.

Ainsi, lors de période de gel ou d'agression chimique, la couche de peinture est souvent détériorée. De plus, son faible accrochage sur le panneau cimenté provoque des craquelures et éventuellement un détachement de la couche de peinture.

Un autre inconvénient des panneaux actuels est qu'ils dégagent des fumées nocives en cas d'incendie. En effet, les peintures utilisées renferment des composants halogénés qui peuvent être nocifs et dégager des gaz dangereux lorsqu'ils sont brûlés. Ce point peut être particulièrement gênant lorsque les panneaux doivent être utilisés dans des domaines où le classement au feu est très sévère.

Un autre inconvénient des couches de peinture est qu'ils ne permettent pas de compenser les aspérités du matériau tel que le ciment ou le béton et que donc l'aspect extérieur des panneaux recouverts d'une couche de peinture n'est pas parfaitement lisse et donc médiocre.

La présente invention a pour objet un panneau à matrice cimentaire qui a notamment pour but de pallier les inconvénients des dispositifs actuels.

L'un des premiers buts de l'invention est de réaliser un panneau avec une couche de surface qui ne met pas en oeuvre de solvant.

L'invention a pour cela l'avantage de prévoir la formation d'une couche de revêtement du panneau composée d'une résine polymère excluant l'utilisation de solvant.

De ce fait, le panneau à matrice cimentaire selon l'invention a un état de surface très performant et ne provoque pas de dégagement de solvant sous forme gazeuse dans l'atmosphère.

Un autre objet de l'invention est de réaliser un panneau présentant un bon accrochage entre ses deux composants structurels.

Elle a pour cela l'avantage de présenter une cohésion importante entre la matrice cimentaire et la ou les couches de résine qui la recouvrent.

Ce bon accrochage est notamment réalisé par une adhésion et également par des liaisons chimiques. Cette cohésion importante entre la ou les couches et la matrice cimentaire permet la réalisation d'un panneau qui résiste parfaitement à diverses agressions extérieures.

Ainsi, le panneau à matrice cimentaire selon l'invention a l'avantage de résister aux agressions chimiques provoquées notamment par les gaz d'échappement de voitures, le sel, etc. Cette résistance aux agressions chimiques est également améliorée par la nature même de la couche de résine qui est utilisée.

Un autre but de l'invention est de permettre une compatibilité du panneau à matrice cimentaire aux normes de résistance au feu.

Il faut remarquer que le panneau selon l'invention a l'avantage d'éviter tout dégagement de gaz nocif tel que des gaz halogènes lors d'un incendie. L'utilisation des panneaux à matrice cimentaire selon l'invention peut donc être large.

Un autre avantage de l'invention est de réaliser un panneau résistant à des agressions diverses telles que les ultraviolets et le gel. En effet, la couche de résine utilisée selon l'invention a des caractéristiques permettant de résister à ces attaques extérieures.

D'autres buts et avantages de la présente invention apparaîtront au cours de la description qui va suivre, qui n'est cependant donnée qu'à titre indicatif.

La présente invention concerne un panneau à matrice cimentaire, utilisable notamment dans le domaine de la construction et des travaux publics, par exemple pour la protection et le recouvrement d'ouvrages tels que des tunnels, composé d'une matrice cimentaire recouverte d'au moins une couche de résine présentant chacune des fonctions hydroxylées qui se combinent pour assurer une bonne cohésion entre la couche de résine et la matrice cimentaire, caractérisé par le fait que le panneau utilise une résine liquide constituée d'une composition polymérisable en l'absence de tout solvant, qui se polymérise par réticulation à température ambiante lors de son application sur la matrice, permettant de supprimer l'évaporation de produits nocifs, de réduire la durée de séchage et d'augmenter la résistance de la matrice.

Le panneau selon l'invention comprend tout d'abord une matrice cimentaire.

Cette matrice cimentaire sera composée de façon courante par tout ciment actuellement utilisé. Cette matrice cimentaire comportera néanmoins des fonctions hydroxylées, c'est-à-dire des groupements OH susceptibles de coopérer avec d'autres groupements OH présents dans la résine.

Dans un mode particulier de réalisation de l'invention, la matrice cimentaire comporte également des charges minérales. Les charges minérales seront utilisées pour renforcer la résistance mécanique de la matrice.

Tout type de charge minérale pourra être utilisé mais préférentiellement des fibres de verre de type alcali-résistantes. On pourra notamment utiliser des fibres de verre courtes.

La matrice cimentaire pourra être fabriquée par coulée du ciment afin de former des plaques de formes et de dimensions variables telles que des plaques rectangulaires manipulables par une ou plusieurs personnes.

Le panneau à matrice cimentaire selon l'invention comprend également une ou plusieurs couches de résine qui permettent de recouvrir la matrice cimentaire.

Le nombre de couches de résine n'est pas limité mais on pourra former, par mesure de simplicité, une seule couche ou deux couches, l'une formant une couche de préparation et la deuxième couche une couche de finition.

Les couches de résine pourront présenter une épaisseur variable et notamment une épaisseur de l'ordre de 100 à 500 micromètres. Les couches seront formées afin de couvrir l'ensemble de la surface de la plaque de matrice cimentaire.

La ou les couches sont formées en une résine, cette résine comportant du méthacrylate de méthyle. L'utilisation de méthacrylate de méthyle permet de constituer une résine polymérisable.

Cette polymérisation peut être effectuée en un temps réduit de l'ordre d'une trentaine de minutes par exemple et à température ambiante. L'utilisation de méthacrylate de méthyle permet donc une facilité de mise en oeuvre des couches à former.

Les couches de résine comprennent également au moins un composant monomère ou copolymère acrylique hydroxylé.

Les monomères ou copolymères acryliques hydroxylés sont d'une part compatibles avec le méthacrylate de méthyle lors de la polymérisation. Par ailleurs, ils comportent des fonctions hydroxylées compatibles avec celles présentes dans la matrice cimentaire.

On pourra par exemple employer de l'acrylate éthyl 2 hexyl.

La résine ainsi formée est une résine polymère dont la polymérisation peut être effectuée à température ambiante par réticulation.

Par ailleurs, la présence de monomères ou de copolymères acryliques hydroxylés assure une bonne cohésion avec la matrice cimentaire qui comporte elle-même des fonctions hydroxylées.

Dans le mode de réalisation où la matrice cimentaire est renforcée par des charges minérales telles que des fibres de verre, la résine peut comporter des fonctions silane, notamment par la présence de méthacryloxypropyl triméthoxysilane.

Les fonctions silane permettent en effet d'établir des liaisons chimiques avec les charges minérales de la matrice cimentaire. Ces fonctions renforcent alors la cohésion entre la couche de résine et la matrice cimentaire.

Dans un autre mode de réalisation de l'invention, la résine comprend des agents de réticulation méthacrylique bifonctionnels et trifonctionnels.

Ces agents de réticulation méthacrylique seront par exemple du diméthacrylate de butane diol et du triméthylolpropane triméthacrylate. La réticulation bi et trifonctionnelle permet d'augmenter la rigidité de la résine par une réticulation suivant plusieurs directions.

Il faut également noter la bonne tenue à l'hydrolyse des acrylates.

Par ailleurs, ces agents de réticulation méthacrylique augmentent la résistance aux agressions diverses auxquelles est soumis le panneau. Ils assurent en effet une meilleure cohésion et une plus grande rigidité de la résine ce qui lui procure une résistance mécanique aux chocs et une résistance aux agressions chimiques très performantes.

Suivant un premier mode de réalisation, on forme une seule couche de résine sur la matrice cimentaire. Cette possibilité permet une fabrication rapide du panneau par la couverture d'une seule couche de résine.

Dans un autre mode de réalisation, on préférera former au moins deux couches superposées de résine.

La première couche de résine appelée couche de préparation aura préférentiellement une épaisseur moindre à la deuxième couche appelée couche de finition.

On pourra par exemple former une couche de préparation d'une épaisseur voisine de 100 micromètres et une couche de finition de l'ordre de 300 micromètres.

La couche de préparation a pour fonction de compenser les éventuelles aspérités que présente la surface supérieure de la matrice cimentaire. Pour ce faire, on pourra utiliser une couche de préparation formée par la résine selon l'invention avec une dilution supérieure à celle de la résine utilisée pour la couche de finition.

On obtient de cette façon une résine de même composition pour les différentes couches mais la dilution supérieure de la couche de préparation permet de limiter sa viscosité.

La viscosité inférieure de la couche de préparation lui permet d'intégrer et de s'insérer de façon plus efficace dans les aspérités de la surface de la matrice cimentaire. Elle permet de cette façon de compenser ces aspérités.

La mise en place de la couche de finition s'effectue alors sur la couche de préparation et permet d'obtenir un meilleur état de surface du panneau à matrice cimentaire. En effet, la couche de préparation a compensé les aspérités de la matrice cimentaire et l'état de surface final est donc particulièrement lisse.

On forme ainsi un panneau à matrice cimentaire recouvert d'une ou plusieurs couches de résine qui lui procure une bonne résistance aux agressions extérieures telles que les agressions chimiques ou encore les ultraviolets, le gel et les graffitis.

La mise en oeuvre de l'invention s'effectue de façon très pratique.

Dans un premier temps, il est possible de réaliser la matrice cimentaire par coulée dans des moules de ciment comportant éventuellement des charges minérales telles que des fibres de verre.

La matrice cimentaire ainsi formée peut être recouverte d'une ou de plusieurs couches de résine.

Selon l'invention, il est possible d'effectuer la mise en place des couches de résine de façon très pratique et efficace. En effet, cette mise en place peut être effectuée à température ambiante.

Par ailleurs, les couches de résine peuvent être appliquées par pulvérisation de résine liquide non encore polymérisée sur la surface de la matrice cimentaire. La polymérisation s'effectue alors sur place.

Ce type de fabrication des panneaux à matrice cimentaire évite toute utilisation de solvant qui présente de nombreux inconvénients tels qu'ils ont été déjà mentionnés.

Suivant le mode de réalisation où on utilise deux couches de résine, on applique d'abord par pulvérisation la résine liquide composant la première couche dite de préparation.

Cette première couche préférentiellement de viscosité inférieure permet de compenser le relief et les aspérités que comporte la surface de la matrice cimentaire.

Une fois la couche de préparation mise en place et polymérisée, il est possible d'appliquer la deuxième couche dite de finition. Cette couche étant de même composition que la couche de préparation, leur cohésion est très bonne.

La couche de finition assure une plus grande épaisseur de résine, procure un état de surface lisse et une bonne résistance aux diverses agressions extérieures auxquelles est soumis le panneau.

La résine utilisée pour les couches est donc composée d'un polymère méthacrylique réticulé obtenu par polymérisation radiculaire par ouverture des doubles liaisons.

On donne ci-après un exemple de composition utilisable pour la résine avec des fourchettes de proportions pondérales indicatives :
- polyméthacrylate de méthyle de bas poids moléculaire 20 à 40 %
- méthacrylate de méthyle 40 à 60 %
- acrylate éthyl 2 hexyl 10 à 30 %
- méthacrylate d'isobornyl 5 à 20 %
- diméthacrylate de butane diol 5 à 10 %
- triméthylolpropane triméthacrylate 3 à 10 %
- méthacryloxypropyl triméthoxysilane 2 à 5 %

Dans le cadre de la fourchette ci-dessus, on donnera ci-après un exemple de composition qui a donné un bon résultat sur une matrice cimentaire renforcée de fibres de verre :
- polyméthacrylate de méthyle 20 parts
- méthacrylate de méthyle 48 parts
- acrylate éthyl 2 hexyl 12 parts
- méthacrylate d'isobornyl 9 parts
- diméthacrylate de butane diol 5 parts
- triméthylolpropane triméthacrylate 4 parts
- méthacryloxypropyl triméthoxysilane 2 parts
soit un total de 100 parts.

Pour l'application, la résine ci-dessus sera additionnée :
- résine 100
- silice pyrogénée 2 en poids de résine
- oxyde de titane 10 en poids de résine

Outre le polyméthacrylate de méthyle et les différents monomères acryliques et méthacryliques copolymérisables cités, on pourra utiliser les éléments suivants, de nature courante :
- un agent thixotropant,
- un ou plusieurs agents tensio-actifs de débullage et mouillant.

Afin de teinter les couches de résine, on pourra ajouter à la composition des pigments minéraux.

Par ailleurs, pour favoriser le durcissement à température ambiante, une proportion de 3 à 5 % en poids de la composition sera constituée par un péroxyde de dibenzoile.

## Revendications

1. Panneau à matrice cimentaire, utilisable notamment dans le domaine de la construction et des travaux publics, par exemple pour la protection et le recouvrement d'ouvrages tels que des tunnels, composé d'une matrice cimentaire recouverte d'au moins une couche de résine présentant chacune des fonctions hydroxylées qui se combinent pour assurer une bonne cohésion entre la couche de résine et la matrice cimentaire, **caractérisé par le fait que** le panneau utilise une résine liquide constituée d'une composition polymérisable en l'absence de tout solvant, qui se polymérise par réticulation à température ambiante lors de son application sur la matrice, permettant de supprimer l'évaporation de produits nocifs, de réduire la durée de séchage et d'augmenter la résistance de la matrice.

2. Panneau à matrice cimentaire, selon la revendication 1, **caractérisé par le fait que** la matrice cimentaire est renforcée par des charges minérales telles que des fibres de verre.

3. Panneau à matrice cimentaire, selon la revendication 2, **caractérisé par le fait que** la résine comprend des fonctions silane permettant d'établir des liaisons chimiques avec les charges minérales de la matrice cimentaire, pour renforcer la cohésion entre la couche et la matrice.

4. Panneau à matrice cimentaire, selon l'une des revendications 1 à 3, **caractérisé par le fait que** la résine comprend des agents de réticulation méthacrylique bi et tri-fonctionnels afin d'augmenter la rigidité et la résistance aux agressions du panneau.

5. Panneau à matrice cimentaire, selon l'une des revendications 1 à 4, **caractérisé par le fait qu'**il présente deux couches superposées de résine de même composition, la première couche constituant une couche de préparation et la deuxième une couche de finition.

6. Panneau à matrice cimentaire, selon la revendication 5, **caractérisé par le fait que** la couche de préparation est plus diluée que la couche de finition pour diminuer sa viscosité avant polymérisation, afin qu'elle s'insère dans les aspérités de la surface de la matrice cimentaire pour les compenser.

7. Panneau à matrice cimentaire, selon l'une des revendications 1 à 6, **caractérisé par le fait que** la résine a la composition, en proportions pondérales, suivante :
- polyméthacrylate de méthyle de bas poids moléculaire 20 à 40 %
- méthacrylate de méthyle 40 à 60 %
- acrylate éthyl 2 hexyl 10 à 30 %
- méthacrylate d'isobornyl 5 à 20 %
- diméthacrylate de butane diol 5 à 10 %
- triméthylolpropane triméthacrylate 3 à 10 %
- méthacryloxypropyl triméthoxysilane 2 à 5 %

8. Panneau à matrice cimentaire, selon l'une des revendications 3 à 7, **caractérisé par le fait que** les fonctions silane de la résine sont apportées par la présence dans la composition de méthacryloxypropyl triméthoxysilane.

## Patentansprüche

1. Bauplatte mit Zementmatrix, die nämlich im Bereich der Bauindustrie und des Tiefbaus verwendbar ist, beispielsweise zum Schutz und zum Überdecken von Bauarbeiten, wie Tunnels, bestehend aus einer Zementmatrix, die mit wenigstens einer Harzschicht überzogen ist, welche jeweils hydroxylierte Funktionen aufweisen, die sich kombinieren, um eine gute Haftung zwischen der Harzschicht und der Zementmatrix zu sichern, **dadurch gekennzeichnet, daß** die Platte ein flüssiges Harz verwendet, das aus einer Zusammensetzung gebildet ist, die in Abwesenheit von irgendeinem Lösungsmittel polymisiert werden kann und durch Vernetzung auf Umgebungstemperatur während dem Anbringen auf die Matrix polymerisiert, wodurch erlaubt wird, die Verdampfung der schädlichen Produkte zu unterdrücken, die Trocknungszeit zu kürzen und die Stärke der Matrix zu erhöhen.

2. Bauplatte mit Zementmatrix nach Anspruch 1, **dadurch gekennzeichnet, daß** die Zementmatrix mit Füllstoffen, wie Glasfasern, verstärkt ist.

3. Bauplatte mit Zementmatrix nach Anspruch 2, **dadurch gekennzeichnet, daß** das Harz Silanfunktionen umfaßt, die es erlauben, chemische Verbindungen mit den Mineralfüllstoffen der Zementmatrix zustandezubringen, um die Kohäsion zwischen der Schicht und der Matrix zu verstärken.

4. Bauplatte mit Zementmatrix nach einem der Ansprüche 1 bis 3, **dadurch gekennzeichnet, daß** das Harz Bi- und Trifunktionelle Methacryl-Vernetzungsagenzien umfaßt, um die Steifheit und die Angriffsbeständigkeit der Platte zu erhöhen.

5. Bauplatte mit Zementmatrix nach einem der Ansprüche 1 bis 4, **dadurch gekennzeichnet, daß** sie zwei übereinanderliegende Harzschichten dergleichen Zusammensetzung aufweist, wobei die erste Schicht eine Vorbereitungsschicht und die zweite eine Endschicht bildet.

6. Bauplatte mit Zementmatrix nach Anspruch 5, **dadurch gekennzeichnet, daß** die Vorbereitungsschicht mehr verdünnt ist als die Endschicht, um ihre Viskosität vor Polymerisierung zu vermindern, derart, daß sie in die Unebenheiten der Oberfläche der Zementmatrix hineindringt, um diese auszugleichen.

7. Bauplatte mit Zementmatrix nach einem der Ansprüche 1 bis 6, **dadurch gekennzeichnet, daß** das Harz die folgende Zusammensetzung, in Gewichtsprozent, aufweist:
- Niedrigmolekülargewicht-Methylpolymethacrylat 20 - 40 %
- Methylmethacrylat 40 - 60 %
- Ethyl-2-hexylacrylat 10 - 30 %
- Isobornylmethacrylat 5 - 20 %
- Butandioldimethacrylat 5 - 10 %
- Trimethylolpropantrimethacrylat 3 - 10 %
- Methacryloxypropyltrimethoxysilan 2 - 5 %

8. Bauplatte mit Zementmatrix nach einem der Ansprüche 3 bis 7, **dadurch gekennzeichnet, daß** die Silanfunktionen des Harzes durch das Vorhandensein von Methacryloxypropyltrimethoxysilan in der Zusammensetzung geliefert werden.

## Claims

1. Building panel with cement matrix, viz. usable in the field of the building industry and public works, e.g. for protecting and covering works such as tunnels, comprised of a cement matrix covered with at least one resin layer each having hydroxylated functions that combine in order to ensure a good adherence between the resin layer and the cement matrix, **characterised in that** the panel uses a liquid resin formed of a composition that can be polymerised in the absence of any solvent, that polymerises through cross-linking at room temperature during its application onto the matrix, allowing suppressing the evaporation of the noxious products, reducing the drying time and increasing the strength of the matrix.

2. Building panel with cement matrix according to claim 1, **characterised in that** the cement matrix is reinforced with mineral fillers such as fibreglass.

3. Building panel with cement matrix according to claim 2, **characterised in that** the resin comprises silane functions allowing creating chemical links with the mineral fillers of the cement matrix, in order to reinforce the cohesion between the layer and the matrix.

4. Building panel with cement matrix according to any of claims 1 to 3, **characterised in that** the resin comprises bi- and tri-functional methacrylic cross-linking agents, in order to increase the rigidity and the resistance to aggressions of the panel.

5. Building panel with cement matrix according to any of claims 1 to 4, **characterised in that** it has two superposed resin layers of the same composition, the first layer forming a preparation layer and the second one a finishing layer.

6. Building panel with cement matrix according to claim 5, **characterised in that** the preparation layer is more diluted than the finishing layer, in order to reduce its viscosity before polymerisation, so that it penetrates into the rough protuberances of the surface of the cement matrix, in order to compensate for them.

7. Building panel with cement matrix according to any of claims 1 to 6, **characterised in that** the resin has the following composition, in weight proportions:
- low-molecular-weight methyl polymethacrylate 20 - 40 %
- methyl methacrylate 40- 60 %
- ethyl-2-hexylacrylate 10 - 30 %
- isobornyl methacrylate 5 - 20 %
- butanediol dimethacrylate 5 - 10 %
- trimethylolpropane trimethacrylate 3- 10 %
- methacryloxypropyl trimethoxysilane 2 - 5 %

8. Building panel with cement matrix according to any of claims 3 to 7; **characterised in that** the silane functions of the resin are provided by the presence of methacryloxypropyl trimethoxysilane in the composition.
